# EUROPÄISCHE PATENTANMELDUNG

(11) **EP 2 514 659 A1**
(43) Veröffentlichungstag der Anmeldung: **24.10.2012**
(21) Anmeldenummer: 12405031.1
(22) Anmeldetag: 21.03.2012
(51) Int. Cl.: B62J 1/08, B62J 1/02, B62J 1/06

(54) **Verstellvorrichtung für einen Fahrradsattel**

(30) Priorität: 20.04.2011 CH 6982011
(71) Anmelder: Lötscher, Marius, 3115 Gerzensee (CH)
(72) Erfinder: Lötscher, Marius, 3115 Gerzensee (CH)
(74) Vertreter: Rüfenacht, Philipp Michael

(57) **Zusammenfassung**

Die Erfindung betrifft eine Verstellvorrichtung (30, 60, 70, 80) für einen Sattel (10) eines Fahrrads, welche ein Fahrradverbindungsstück (31, 61, 71, 81), ein Sattelverbindungsstück (32, 62, 72, 82), einen Mechanismus und einen Antrieb umfasst. Der Mechanismus ist dabei in einem ersten Drehpunkt (35.3) am fest mit dem Fahrrad verbindbaren Fahrradverbindungsstück (31, 61, 71, 81) und insbesondere an einem im Sattelrohr des Fahrradrahmens (11) befestigten Stützrohr und in einem zweiten Drehpunkt (35.4) am mit dem Sattel (10) verbindbaren Sattelverbindungsstück (32, 62, 72, 82) gelagert. Der Mechanismus ermöglicht eine Verschiebung des Sattelschwerpunkts (16) entlang einer definierten Bahn zwischen einer hohen Position (12.1), die vor der Sattelrohrachse (17) liegt, in eine tiefe Position (12.2), die hinter der Sattelrohrachse (17) liegt. Der Antrieb ermöglicht eine Bewegung des Sattels (10) entlang der definierten Bahn und eine Arretierung des Sattels (10) in mehreren Sattelpositionen (12.1 - 12.2) entlang der definierten Bahn. Der Mechanismus verändert dabei in Abhängigkeit der Sattelpositionen (12.1 - 12.2) entlang der definierten Bahn den Winkel des Sattels (10) zur Sattelrohrachse sowie den Winkel des Sattels (10) zu einer durch die beiden Drehpunkte (35.3, 35.4) verlaufenden Gerade, und der Antrieb greift nur an Bestandteilen der Verstellvorrichtung (30, 60, 70, 80) an. Die Verstellvorrichtung (30, 60, 70, 80) kann optional drei ausgezeichnete Positionen (20.1 - 20.3) zum Bergauf- (20.1), Bergab- (20.3) und Geradeaus-Fahren (20.2) einnehmen, wobei sich diese Positionen (20.1 - 20.3) alle in Höhe, Lage entlang der Fahrtrichtung (vorne/hinten) und Sattelneigung unterscheiden. Insbesondere kann die Verstellvorrichtung (30, 60, 70, 80) auch stufenlos verstell- und arretierbar sein und eine Vielzahl von Sattelpositionen (20.1 - 20.3) einnehmen, wobei die Verstellvorrichtung (30, 60, 70, 80) ganz besonders vorteilhaft auch während der Fahrt bedient werden kann.

## Beschreibung

### Technisches Gebiet

Die Erfindung betrifft eine Verstellvorrichtung für einen Sattel eines Fahrrads, welche ein Fahrradverbindungsstück, ein Sattelverbindungsstück, einen Mechanismus und einen Antrieb umfasst. Der Mechanismus ist dabei in einem ersten Drehpunkt am fest mit dem Fahrrad verbindbaren Fahrradverbindungsstück und insbesondere an einem im Sattelrohr des Fahrradrahmens befestigten Stützrohr und in einem zweiten Drehpunkt am mit dem Sattel verbindbaren Sattelverbindungsstück gelagert. Der Mechanismus ermöglicht eine Verschiebung des Sattelschwerpunkts entlang einer definierten Bahn zwischen einer hohen Position, die vor der Sattelrohrachse liegt, in eine tiefe Position, die hinter der Sattelrohrachse liegt. Der Antrieb ermöglicht eine Bewegung des Sattels entlang der definierten Bahn und eine Arretierung des Sattels in mehreren Sattelpositionen entlang der definierten Bahn.

### Stand der Technik

Es existiert bereits eine Vielzahl von verschiedenen Verstellvorrichtungen für Fahrradsättel. Beispielsweise betrifft die Druckschrift DE 42 32 655 A1 (Frey) eine Sitzeinrichtung mit Mitteln zur Anpassung der Sitzeinrichtung an die Körpermasse des Fahrers und zur Einstellung verschiedener Sitzpositionen. Dabei ist die Sitzeinrichtung entlang einer Bewegungsbahn mit sich änderndem Richtungsverlauf verstellbar, wodurch während der Fahrt eine stufenlose Anpassung der Sitzeinrichtung in Rahmenlängsrichtung, Sitzhöhe und Sitzneigung vorgenommen werden kann. Die Sitzführung am Fahrzeugrahmen kann je nach den geforderten Einsatzaufgaben z. B. auf einem Teilabschnitt linearen Verlauf aufweisen und auf einem daran anschliessenden Abschnitt in vorbestimmter Weise gekrümmt verlaufen oder aber auch über den gesamten Verstellbereich kurvenförmigen Verlauf besitzen. Es sind ausgezeichnete Sitzpositionen für ebenes Gelände, Bergab- und Bergauffahrt vorhanden, und die Sitzeinrichtung kann auch eine Federwirkung aufweisen. Die Sitzführung kann z. B. als Gelenkviereck mit verschieden langen Gelenkachsabständen oder als gekrümmte Führungsschiene ausgestaltet sein und über Federkraft (insbesondere durch Gasfedern) oder motorisch bewegt werden. Die Sitzeinrichtung der DE 42 32 655 A1 (Frey) weist eine direkt am Fahrradrahmen angreifende Konstruktion auf, wodurch sich der Nachteil ergibt, dass die Sitzeinrichtung nur in Kombination mit eigens dafür konstruierten oder modifizierten Fahrradrahmen einsetzen lässt. Handelsüblichen Fahrräder können mit dieser Verstellvorrichtung nicht nachgerüstet werden.

Das Gebrauchsmuster DE 20 2009 008 22 1 U (Monno) beschreibt eine andere Vorrichtung zur Veränderung der Position des Sattels: sie weist zwei Schenkel auf, die jeweils an einem Ende drehbar an einem fest mit dem Fahrrad verbundenen Teil gelagert sind. Am anderen Ende sind die zwei Schenkel an einem mit dem Sattel verbundenen Teil so gelagert, dass sie in etwa zwei gegenüberliegende Seiten eines Parallelogramms bilden. Die zwei Schenkel können durch ein Federelement in diejenige Position gebracht werden, bei der der Sattel seine höchste Position hat. Der Abstand der beiden Lagerpunkte des Schenkels der sich in der höchsten Position des Sattels hinten befindet ist etwas kürzer als der Abstand der beiden Lagerpunkte des anderen Schenkels. Das bewirkt, dass der Sattel in der Position unten-hinten etwas nach hinten abschüssig geneigt und damit für die Bergabfahrt geeignet ist und dass der Sattel in der Position oben-vorne zum Geradeausfahren nicht geneigt ist. Ein Feststellelement kann durch einen Rastmechanismus bei der höchsten Sattelstellung und in der Position hinten-unten sowie möglicherweise mehreren Rastpunkten dazwischen fixiert werden. Die Vorrichtung der DE 20 2009 008 22 1 U (Monno) vermag den Sattel aber nicht in eine zur Berganfahrt geeignete Position zu bringen, in welcher der Sattelschwerpunkt vor der Sattelrohrachse zu liegen kommt. In einer weiteren Ausführung der Vorrichtung der DE 20 2009 008 22 1 U (Monno) ist der Sattel am Sattelverbindungsteil nach vorn versetzt befestigt, so dass der Sattelschwerpunkt in der höchsten Verstellposition vor der Sattelrohrachse zu liegen kommt. Mit dieser Anpassung kann zwar die hohe/vordere Position für die Berganfahrt verbessert werden, in gleichem Mass verschlechtert sich aber die tiefe/hintere Position für die Bergabfahrt.

Die Druckschrift DE 4 401 980 A (Wilhelm Link) offenbart eine Vorrichtung zur Höhenverstellung und Dämpfung eines Fahrradsattels mit einer in ein Rahmenteil des Fahrrads einführbaren Sattelstütze. Die Vorrichtung umfasst ein in der Sattelstütze angeordnetes und über einen Hebel steuerbares Gasfederelement. Durch einfaches Betätigen des Hebels ist eine mühelose Verstellmöglichkeit der Sattelhöhe auch während der Fahrt völlig gefahrlos möglich. Die Gasfeder bewirkt eine Dämpfung und kann in jeder beliebigen Position arretiert werden. Mit der Vorrichtung der DE 4 401 980 A (Wilhelm Link) kann der Sattel lediglich in der Höhe, nicht aber in horizontaler Richtung verstellt und auch nicht geneigt werden.

Die aus dem Stand der Technik bekannten und insbesondere die oben beschriebenen Vorrichtungen zum Verstellen eines Fahrradsattels weisen alle den Nachteil auf, dass sie nicht gleichzeitig den Sattelschwerpunkt durch einen Antrieb in mindestens eine tiefe Position hinter der Sattelrohrachse mit nach hinten geneigtem Sattel zum bergabwärts fahren und eine hohe Position vor der Sattelrohrachse mit nach vorne geneigtem Sattel zum bergaufwärts fahren bringen können und sich mit handelsüblichen Fahrradrahmen einsetzen lassen. Es lässt sich durch die bekannten Vorrichtungen also kein handelsübliches Fahrrad derart nachrüsten, dass der Sattel durch einen Antrieb in Höhe, Längsrichtung und Neigung in zum bergaufwärts und bergabwärts fahren geeignete Positionen bewegt werden kann.

### Darstellung der Erfindung

Aufgabe der Erfindung ist es, eine dem eingangs genannten technischen Gebiet zugehörende Vorrichtung zu schaffen, welche einen Sattel gleichzeitig in der Höhe, der Längsrichtung und der Neigung verstellt und über einen Antrieb verfügt, welcher den Sattel in eine zum bergabwärts fahren geeignete Position (mit Sattelschwerpunkt hinter der Sattelrohrachse, der Sattel liegt dabei unten und ist nach hinten geneigt) und eine zum bergaufwärts fahren geeignete Position (mit Sattelschwerpunkt vor der Sattelrohrachse, der Sattel liegt dabei oben und ist nach vorne geneigt) bringen kann und zudem mit einem handelsüblichen Fahrradrahmen eingesetzt werden kann.

Die Lösung der Aufgabe ist durch die Merkmale des Anspruchs 1 definiert. Gemäss der Erfindung umfasst eine Verstellvorrichtung für einen Sattel eines Fahrrads ein Fahrradverbindungsstück, ein Sattelverbindungsstück, einen Mechanismus und einen Antrieb. Der Mechanismus ist dabei in einem ersten Drehpunkt am fest mit dem Fahrrad verbindbaren Fahrradverbindungsstück und insbesondere an einem im Sattelrohr des Fahrradrahmens befestigten Stützrohr und in einem zweiten Drehpunkt am mit dem Sattel verbindbaren Sattelverbindungsstück gelagert. Der Mechanismus ermöglicht eine Verschiebung des Sattelschwerpunkts entlang einer definierten Bahn zwischen einer hohen Position, die vor der Sattelrohrachse liegt, in eine tiefe Position, die hinter der Sattelrohrachse liegt. Der Antrieb ermöglicht eine Bewegung des Sattels entlang der definierten Bahn und eine Arretierung des Sattels in mehreren Sattelpositionen entlang der definierten Bahn. Der Mechanismus verändert dabei in Abhängigkeit der Sattelpositionen entlang der definierten Bahn den Winkel des Sattels zur Sattelrohrachse sowie den Winkel des Sattels zu einer durch die beiden Drehpunkte verlaufenden Gerade, und der Antrieb greift nur an Bestandteilen der Verstellvorrichtung an.

Die Erfindung bietet den grossen Vorteil, dass sie den Sattel in mindestens drei Dimensionen (in Höhe, Längsrichtung und Neigung) verstellen und daher den aktuellen fahrtechnischen Ansprüchen (bergauf, bergab, geradeaus, flache Strasse, sehr unebener Untergrund, steile Hindernisse, usw.) anpassen kann und daher weit mehr Verstellmöglichkeiten bietet als die handelsüblichen Sattelstangen, welche Sattel und Sattelrohr miteinander verbinden und lediglich eine manuelle Verstellung der Sattelhöhe entlang der Sattelrohrachse erlauben, wobei allenfalls noch die Neigung des Sattels angepasst werden kann. Zudem kann die Erfindung an einem handelsüblichen Fahrrad verwendet bzw. selbiges damit ohne grossen Aufwand nachgerüstet werden, indem die Sattelstange durch die Erfindung ersetzt wird. Von aus dem Stand der Technik bekannte Alternativen zu Sattelstangen hebt sich die Erfindung also dadurch ab, dass sie deutlich grössere Verstellmöglichkeiten bietet und mit einem handelsüblichen Fahrradrahmen verwendet werden kann.

Die relativen Positionsangaben (hoch und tief, oben und unten, vorne und hinten, rechts und links) beziehen sich auf ein in einer Fahrposition (zu einer Fahrt geradeaus in einer horizontale Ebene) stehendes Fahrrad in Fahrtrichtung. Somit befindet sich ein Vorderrad vorne, ein Hinterrad hinten, Räder berühren unten den Fahruntergrund bzw. die horizontale Ebene, Sattel und Lenker befinden sich bezüglich der Räder oben und so weiter. Sowohl die tiefe als auch die hohe Position des Sattels, zwischen welchen der Sattelschwerpunkt entlang der definierten Bahn bewegt wird, liegen höher als der höchste Punkt der Räder und über dem Fahrradrahmen. Bevorzugt liegt der Sattelschwerpunkt der erfindungsgemässen Verstellvorrichtung in der hohen Position des Sattels um 10 - 30 cm und insbesondere um 15 - 22 cm weiter vorne und 5 - 25 cm und insbesondere um 8 - 18 cm höher als der Sattelschwerpunkt der tiefen Position des Sattels.

Der Verlauf der definierten Bahn des Sattelschwerpunkts kann eine beliebige Form annehmen, beispielsweise eine gerade, eine mindestens teilweise leicht gekrümmt gerade, wellen-, zacken- oder stufenförmige, eckige, runde, regelmässig oder unregelmässig ansteigende oder sinkende Form oder eine beliebige Kombination oder Folge von (unter anderem den oben genannten) Formen. Insbesondere verläuft die definierte Bahn aber bogenförmig und besonders vorteilhaft als ein Teil eines Kegelschnitts (Kreis, Ellipse, Parabel, Hyperbel). Der Sattelschwerpunkt kann sich dabei ausschliesslich entlang der definierten Bahn bewegen, was durch eine entsprechende Konstruktion der Verstellvorrichtung sichergestellt ist. Die definierte Bahn ist darauf ausgelegt, den Sattel durch die Verstellvorrichtung in eine für die aktuelle Aufgabe geeignete Position zu bringen, wobei ergonomische Überlegungen, praktische Tests, Bequemlichkeit sowie weitere Randbedingungen wie technische Machbarkeit, Gewicht, Grösse, potentielle Verletzungsquellen, Materialwahl, Belastungsbereich usw. der Vorrichtung in die Formgebung der definierten Bahn und der Verstellvorrichtung mit einfliessen. Der Verlauf der definierten Bahn des Sattelschwerpunkts legt dadurch die spezifische Konstruktion und Dimensionierung des Mechanismus fest.

Die oben beschriebenen Aspekte zur Formgebung der definierten Bahn bestimmen auch die Neigung des Sattels, d. h. die Wahl des Winkels des Sattels zur Sattelrohrachse respektive die Wahl des Winkels des Sattels zur durch den ersten und zweiten Drehpunkt verlaufenden Gerade. Die geeignete Neigung des Sattels kann für jeden Punkt der definierten Bahn des Sattelschwerpunkts individuell bestimmt werden und ist meist unterschiedlich. Die Konstruktion des Mechanismus ist derart ausgelegt, dass der Sattel in jeder festgelegten Position entlang der definierten Bahn die geeignete Neigung einnimmt.

Unter dem Begriff Sattel können explizit ein Sitz oder andere Vorrichtungen verstanden werden, welche dazu dienen, einen Fahrer auf einem Fahrrad zu stützen. Der Begriff Mechanismus ist weit auszulegen und kann eine beliebige Anzahl von Rotations- und/oder Translationselementen und anderen beweglichen Elementen umfassen, beispielsweise Gelenkvielecke (und insbesondere Gelenkvierecke), Kulissen, Zahnrad-, Zahnriemen-, Ketten-, Schnecken-, Rollengewinde-, Gewindestangengetriebe und weitere, um nur einige Elemente zu nennen. Der Mechanismus kann beliebig kompliziert ausgestaltet sein und alle möglichen Bewegungen ausführen, insbesondere durch eine beliebige Anzahl und Kombination von oben genannten Elementen und anderen Verstellmöglichkeiten.

Mit Antrieb sind konstruktive Einheiten gemeint, welche durch Energieumformung zwei gegeneinander bewegliche Teile des Antriebs bewegen bzw. antreiben und dadurch wiederum mit den beweglichen Teilen des Antriebs verbundene Nichtantriebselemente bewegen. Insbesondere kann ein Antrieb auf einer elektrischen, pneumatischen oder hydraulischen Wirkungsweise basieren. Zur Verwendung im Rahmen der Erfindung sind Linear- und Drehantriebe (und insbesondere Gasdruckfedern) besonders gut geeignet. Die gegeneinander beweglichen Teile des Antriebs sind dabei separat ausgebildet und bestehen nicht aus einem einzigen elastischen Körper wie z. B. bei Schrauben- oder Schenkelfedern.

Dass der Antrieb nur an Bestandteilen der Verstellvorrichtung angreift, ist folgendermassen zu verstehen: der Antrieb kann die Verstellvorrichtung auch dann antreiben, wenn die Verstellvorrichtung weder am Fahrrad noch am Sattel befestigt ist und somit freistehend ist. Der Antrieb setzt also an keinem nicht an der Verstellvorrichtung liegenden Punkt an, um die Verstellvorrichtung anzutreiben bzw. zu bewegen. Die Verstellvorrichtung ist lediglich mit dem Fahrradverbindungsstück am Fahrrad und mit dem Sattelverbindungsstück am Sattel befestigt, und der Antrieb ist nur an Teilen der Verstellvorrichtung befestigt. Vorteilhafterweise kann das Fahrradverbindungsstück zur Befestigung am bzw. im Sattelrohr ausgelegt sein, und in diesem Fall kann die Verstellvorrichtung eine handelsübliche Sattelstütze einfach und rasch ersetzen. Es ist dabei explizit vorgesehen, dass Teile des Antriebs gleichzeitig auch als Fahrradverbindungsstück verwendet werden können. Dadurch ist der Antrieb zwar teilweise in seiner Funktion als Fahrradverbindungsstück auch am Fahrrad befestigt, aber ist erfindungsgemäss mit der Verstellvorrichtung verbunden und kann die Verstellvorrichtung auch freistehend antreiben.

Mit Vorteil kann die Verstellvorrichtung den Fahrradsattel in mindestens drei ausgezeichneten Positionen halten: in einer Bergauf-Position, in welcher sich der Sattel in einer ersten Höhe und bezüglich der Sattelrohrachse vorne befindet sowie nach vorne geneigt ist, in einer Bergab-Position, in welcher sich der Sattel in einer zweiten Höhe und bezüglich der Sattelrohrachse hinten befindet sowie nach hinten geneigt ist, in einer Geradeaus-Position, in welcher sich der Sattel in einer dritten Höhe und bezüglich der Sattelrohrachse zwischen der Bergauf- und der Bergab-Position befindet sowie gerade d.h. nicht geneigt ist, wobei die dritte Höhe zwischen der ersten Höhe und der zweiten Höhe liegt.

Die drei ausgezeichneten Positionen Bergauf, Bergab und Geradeaus sind besonders häufig von Nutzen, weil bei der entsprechenden Situation im Fahrbetrieb (also einer Bergauf-, Bergab- und Geradeaus-Fahrt) eine angepasste Sattelposition von grossem Vorteil ist: der Sattel wird in einer herkömmlichen Sattelbefestigung üblicherweise für eine Geradeaus-Fahrt eingestellt bzw. positioniert und fixiert, weil in den meisten Fällen der grösste Teil der Fahrt geradeaus verläuft bzw. weil diese Position einen gewissen Kompromiss zwischen den anderen Positionen darstellt. In der Geradeaus-Position ist die Distanz zwischen Pedalen und Sattel passend zu Beinlänge und die Distanz zwischen Sattel und Lenker sowie die Sattelneigung passend zu einer dem Fahrstil entsprechenden Haltung eingestellt, um eine möglichst ergonomische und effiziente sowie komfortable Sitzposition zu ermöglichen. Überwiegt allerdings der Bergauf- oder Bergab-Anteil der Fahrt, kann den Sattel beispielsweise aber auch zu Beginn der Fahrt in die entsprechende Position gebracht werden.

Die herkömmliche Sattelbefestigung kann zwar in ihrer Position angepasst werden, aber das Anpassen ist zeitaufwendig und bedingt meist auch einen Einsatz von Werkzeug (insbesondere eine Verstellung nach hinten bzw. vorne sowie der Neigung), wobei auch die Fahrt gestoppt und das Fahrrad angehalten werden muss. Deswegen wird bei einer kurzen Fahrt bergauf bzw. bergab häufig darauf verzichtet, die Sattelposition kurzfristig zu verändern, was zu nachteiligen Effekten führt: bei einer Bergauf-Fahrt hebt sich der Fahrer (zum Verschieben seines Schwerpunkts nach vorne und nach oben) aus dem Sattel und steht sozusagen auf dem Fahrrad, ohne sich auf den (in dieser Situation zu tief und zu weit hinten liegenden) Sattel stützen oder setzen zu können. Das ist einerseits ermüdend und andererseits ist der Fahrradrahmen bzw. das Fahrrad weniger unter Kontrolle, weil ein Kontaktpunkt zwischen Fahrer und Fahrrad wegfällt (und damit auch die durch diesen Kontaktpunkt vermittelten Informationen und Manipulationsmöglichkeiten).

Bei einer steilen Bergab-Fahrt verschiebt der Fahrer seinen Schwerpunkt nach hinten unten, indem er seinen Rumpf nach hinten und unten bewegt und dabei den Sattel vor sich in der Bauchregion vorfindet. Dies ist besonders bei einem Unfall gefährlich, insbesondere wenn das Fahrrad entgegen dessen Vorwärtsbewegung beschleunigt (also z. B. gebremst oder blockiert) wird und der Rumpf des Fahrer auf den in Fahrtrichtung liegenden Sattel trifft und verletzt wird. Ausserdem fallen auch bei der Bergab-Fahrt dieselben negativen Aspekte wie bei der Bergauf-Fahrt (ermüdende Position, weniger Kontrolle über den Fahrradrahmen bzw. das Fahrrad) an.

Eine angepasste Position des Sattels ist daher besonders in den drei Fällen bergauf, bergab und geradeaus von Vorteil, und die Verstellvorrichtung mit den genannten drei Freiheitsgraden (Höhe, Neigung und entlang der Fahrtrichtung) entfaltet dabei eine besonders vorteilhafte Wirkung. Idealerweise sind noch weitere arretierbare Positionen auf der definierten Bahn des Sattelschwerpunkts vorgesehen, beispielsweise an die Fahrerhaltung angepasste Positionen zwischen den obengenannten drei Positionen mit einer graduellen Änderung der Freiheitsgrade.

Es kann natürlich auch eine beliebige Anzahl von Positionen vorgesehen sein, welche auch teilweise oder ganz verschieden von den Positionen bergauf, bergab und geradeaus sein können. Besonders ausgezeichnet sind Positionen wie etwa nach hinten unten verschoben für einen erweiterten Platzbedarf beim Transport von Gegenständen oder Personen vor dem Rumpf des Fahrers, vorne oder hinten unten zum einfacheren und besseren Transportieren und/oder Verstauen (dabei wird der Sattel an das Fahrrad angenähert um eine kompaktere Form des Fahrrads zu erreichen), nach vorne verschoben beim Ziehen eines Anhängers und dergleichen mehr.

Bevorzugt ist die Verstellvorrichtung stufenlos verstell- und arretierbar.

Eine stufenlos verstell- und arretierbare Verstellvorrichtung erlaubt eine individuelle und feinstufige, der jeweiligen Situation angepasste Einstellung der Sattelposition und ermöglicht dadurch eine ergonomische und komfortable Sitzhaltung. Ausserdem ist insbesondere bei langen Fahrten eine kleine Veränderung der Sitzposition angenehm und kann den Fahrkomfort deutlich erhöhen. Weiters können etwa beim Transport und der Lagerung des Fahrrads (oder auch in weiteren Situationen wie beispielsweise beim Transportieren von Gegenständen oder Personen mit dem Fahrrad) verschiedene und stufenlos variierbare Positionen von Vorteil sein.

Auf eine stufenlose Verstell- und Arretierbarkeit der Verstellvorrichtung kann aber auch verzichtet werden, insbesondere wenn die Verstellvorrichtung über eine grosse Anzahl von arretierbaren Positionen verfügt.

Es hat sich als zweckdienlich erwiesen, dass der Verstellmechanismus ein Gelenkviereck umfasst.

Ein Gelenkviereck erlaubt auf einfache Weise die Realisierung eines robusten und tragfähigen Verstellmechanismus, welcher platzsparend, günstig und stufenlos verstellbar ist. Wenn die Arme des Gelenkvierecks gegeneinander verschoben werden, dann bewegen sie sich auf eine kontinuierliche Art und Weise, was besonders bei einer stufenlosen Verstellbarkeit von grossem Vorteil ist. Besonders vorteilhaft ist dabei der Mechanismus und insbesondere das Gelenkviereck parallel zu einer durch den Fahrradrahmen verlaufenden Ebene ausgerichtet.

Der Verstellmechanismus kann aber beispielsweise auch aus einem Gelenkvieleck bestehen oder in Form einer Konstruktion mit Zahnrädern oder einer anderen weiter oben beschriebenen Variante ausgestaltet werden.

Besonders geeignet ist ein Gelenkviereck, das unterschiedliche Distanzen zwischen Gelenkdrehpunktpaaren aufweist.

Ein Gelenkdrehpunktpaar besteht aus zwei nebeneinander liegenden bzw. durch einen Arm des Gelenkvierecks verbundene Drehpunkte, wobei die beiden anderen Drehpunkte des Gelenkvierecks das andere Paar bilden. Mit Distanzen zwischen den Gelenkdrehpunktpaaren sind diejenigen Distanzen gemeint, welche die Drehpunkte eines Gelenkdrehpunktpaars vom entsprechenden d.h. durch einen Arm des Gelenkvierecks mit dem Drehpunkt verbundenen Drehpunkt des anderen Gelenkdrehpunktpaars trennen.

Liegt der erste Drehpunkt des einen Gelenkdrehpunktpaars weiter oder näher zum entsprechenden Drehpunkt des anderen Gelenkdrehpunktpaars als der zweite Gelenkdrehpunkt des einen Gelenkdrehpunktpaars, so verschieben sich die Gelenkdrehpunktpaare nicht parallel zueinander, wenn die Arme des Gelenkvierecks gegeneinander bewegt werden, sondern die Gelenkdrehpunktpaare ändern während der Bewegung des Gelenkvierecks den Winkel, in welchem sie zueinander stehen. Auf diese Weise kann durch eine geeignete Wahl der unterschiedlichen Distanzen zwischen den Gelenkdrehpunktpaaren auf einfache Weise ein tragfähiges und robustes Gelenkviereck ausgebildet werden, welches während einer Bewegung des Gelenkvierecks eine kontinuierliche Änderung des Neigungswinkels zwischen den Armen des Gelenkvierecks bewerkstelligt. Diese Neigungsänderung kann vorteilhafterweise sehr einfach auf den Sattel übertragen werden, so dass das Gelenkviereck mit unterschiedlichen Distanzen zwischen den Gelenkdrehpunktpaaren eine definierte Bewegungsbahn mit gleichzeitiger kontinuierlicher Änderung der Sattelneigung generiert.

Es hat sich als zweckdienlich erwiesen, dass die beiden in der Geradeaus-Position am weitesten oben liegenden Gelenkdrehpunkte des Gelenkvierecks weiter auseinander liegen als die beiden am weitesten unten liegenden Gelenkdrehpunkte, wobei die am weitesten oben liegenden Gelenkdrehpunkte jeweils gleich weit von den mit ihnen verbundenen unten liegenden Gelenkdrehpunkten entfernt liegen.

Die in der Geradeaus-Position des Sattels hauptsächlich vertikal verlaufenden Arme des Gelenkvierecks umfassen dabei pro Arm ein Gelenkdrehpunktpaar, wobei die Drehpunkte innerhalb des Paars jeweils den gleichen Abstand aufweisen. Zwischen den beiden Gelenkdrehpunktpaaren liegen aber verschiedene Distanzen: oben liegen die Gelenkdrehpunktpaare weiter auseinander als unten. Dies bewirkt, dass sich die Gelenkdrehpunktpaare nicht parallel zueinander verschieben, wenn die Arme des Gelenkvierecks gegeneinander bewegt werden, sondern dass die Gelenkdrehpunktpaare während der Bewegung des Gelenkvierecks den Winkel ändern, in welchem sie zueinander stehen. Die spezifische Anordnung der grösseren Distanz zwischen den Gelenkdrehpunktpaaren am oberen Ende des Gelenkvierecks erlaubt eine Neigung des Sattels in die gewünschte Richtung (im Verlauf seiner definierten Bahn) und eine grosse Bewegungsfreiheit nach vorne sowie hinten bei gleichzeitigem kompakten Dimensionierung der Verstellvorrichtung.

Alternativ kann allerdings auch die untere Distanz zwischen den Gelenkdrehpunktpaaren grösser sein als die obere. Es kann aber auch die obere und untere Distanz gleich sein, wobei die vordere und hintere Distanz variiert. Natürlich können auch alle vier Distanzen zwischen den Drehpunkten gleich sein. Eine Änderung der Sattelneigung kann entsprechend durch andere Mechanismen bewerkstelligt werden.

Bei einem zweiten bevorzugten Ausführungsbeispiel wird eine Kraft zur Bewegung des Sattels entlang der definierten Bahn und zum Verändern des Winkels des Sattels zur Sattelrohrachse durch miteinander zusammenwirkende Zahnräder und/oder durch Zahnriemen im Verstellmechanismus übertragen.

Miteinander zusammenwirkende Zahnräder haben den grossen Vorteil, dass sie eine kontinuierliche Bewegung und ein einfaches Arretieren der Bewegung ermöglichen. Besonders ineinander verzahnte Zahnräder können grosse Kräfte übertragen und grosse Belastungen aushalten, und zum Arretieren kann sowohl an der Achse der Zahnräder als auch an den Zähnen oder an anderen Stellen des Zahnrads angegriffen werden. Zahnriemen erlauben eine besonders wartungsarme und leichte Verbindung, welche ebenfalls eine schlupffreie Übertragung von grossen Kräften in einer kontinuierlichen Bewegung ermöglicht. Sowohl Zahnräder als auch Zahnriemen können in platzsparender Anordnung zum Bau von besonders kompakten Bewegungsmechanismen verwendet werden.

Der Verstellmechanismus kann aber beispielsweise auch ohne Zahnräder und/oder Zahnriemen ausgestaltet werden, beispielsweise kann er aus einem Gelenkvieleck bestehen oder in einer anderen Form - insbesondere einer weiter oben beschriebenen Variante - ausgestaltet werden.

Bevorzugt hängt die Bewegung des Sattelschwerpunkts relativ zum Fahrradrahmen von einer Bewegung eines Führelements relativ zu einer Kulisse ab, wobei das Führelement entlang der Kulisse in der Verstellvorrichtung bewegt werden kann und durch die Kulisse geführt ist. Die Bewegung des Sattelschwerpunkts hängt insofern von der Bewegung des Führelements ab, als dass die maximale Auslenkung des Führelements in der Kulisse die maximale Auslenkung des Sattelschwerpunkts begrenzt, eine Arretierung des Führelements bezüglich der Kulisse eine Arretierung des Sattelschwerpunkts bewirkt und eine Bewegung des Führelements entlang der Kulisse mit einer Bewegung des Sattelschwerpunkts verbunden ist. Die Kulisse ist dabei insbesondere bogenförmig oder grösstenteils bogenförmig ausgestaltet. Das Führelement verläuft mit Vorteil auf einer kontinuierlichen Bahn, wobei die Kulisse aber auch Stufen, Sprünge oder andere Formen beinhalten kann. Das Führelement muss auch nicht durch eine Kulisse geführt werden oder entlang der Kulisse bewegt werden. Auf ein Führelement und/oder eine Kulisse kann auch gänzlich verzichtet werden.

Mit Vorteil ist die Kulisse an einem Arm des Gelenkvierecks ausgebildet, insbesondere an einem in der Geradeaus-Position hauptsächlich vertikal verlaufenden Arm des Gelenkvierecks.

Die Kulisse ist mit Vorteil an einem Arm des Gelenkvierecks ausgebildet, weil einerseits das Gelenkviereck durch die Kulisse einfach und kostengünstig kontrollier- und arretierbar wird. Andererseits überträgt sich die hohe Stabilität des Gelenkvierecks auf die gesamte Konstruktion, und die kontinuierliche Bewegung des Gelenkvierecks bewirkt eine regelmässige Bewegung der Kulisse. Besonders gut geeignet für die Ausbildung einer Kulisse sind Arme des Gelenkvierecks, welche in der Geradeaus-Position hauptsächlich vertikal verlaufen, weil auf diese Weise eine besonders kompakte und stabile Bauweise ermöglicht wird.

Alternativ kann die Kulisse auch an einer anderen Stelle der Verstellvorrichtung als an einem Arm des Gelenkvierecks ausgebildet sein, beispielsweise als separates Element etwa in Form von horizontalen, in Fahrtrichtung ausgerichteten Platten.

Mit Vorteil umfasst der Antrieb mindestens eine Gasfeder, insbesondere eine lineare Gasfeder und/oder eine Drehgasfeder.

Gasfedern (bzw. Gasdruckfedern) haben den Vorteil, dass sie eine vom Federweg nahezu unabhängige Kraft aufweisen, einen geringen Platzbedarf haben und leicht sind. Zudem bieten Gasfedern die Möglichkeit, auf einfache und elegante Weise einen Dämpfungsmechanismus bzw. eine Federung in die Verstellvorrichtung zu integrieren. Insbesondere lineare Gasfedern sind weit verbreitet, wartungsarm und günstig sowie in hohen Stückzahlen verfügbar. Eine Gasfeder ist in den meisten Fällen derart konstruiert, dass sie einfach und sehr stabil arretiert werden kann, wobei die Arretierung fast immer stufenlos möglich ist.

Auf eine Gasfeder kann allerdings auch verzichtet werden.

Bevorzugt ist die Gasfeder mit einem Ende am Fahrradverbindungsstück und an einem gegenüberliegenden Ende am Führelement befestigt, wobei das Führelement entlang der Kulisse bewegt werden kann.

Durch eine Befestigung der Gasfeder am Fahrradverbindungsstück wird die von der Gasfeder ausgeübte und/oder übertragene Kraft effizient auf den Fahrradrahmen übertragen, und eine Befestigung des anderen Endes der Gasfeder am Führelement erlaubt eine Führung, Kontrolle und/oder Federung des Führelements durch die Gasfeder. Zusammen mit der Führung des Führelements durch die Kulisse ergeben sich so synergetische Effekte, welche den Mechanismus der Verstellvorrichtung in seiner Bewegung definieren. Dabei ist besonders eine stufenlos arretierbare Gasfeder von Vorteil, welche beispielsweise das Führelement in der Kulisse (und dadurch die Verstellvorrichtung) in einer beliebigen Stellung fixieren kann. Zudem kann die Verstellvorrichtung besonders kompakt gebaut werden, wenn die Gasfeder am Fahrradverbindungsstück befestigt ist (insbesondere, wenn Teile der Gasfeder auch als Fahrradverbindungsstück dienen).

Die Gasfeder kann aber auch an anderen Stellen der Verstellvorrichtung als am Fahrradverbindungsstück und/oder am Führelement befestigt werden, beispielsweise am Sattelverbindungsstück, an den Armen und/oder Drehpunkten des Mechanismus oder anderen Elementen der Verstellvorrichtung.

Bevorzugt umfasst die Verstellvorrichtung eine Federungsfunktion.

Zur Erhöhung des Komforts und/oder zur Verhinderung von Verletzungen kann die Verstellvorrichtung über eine Federungsfunktion verfügen. Dabei kann die Federungsfunktion in den (den Sattel verstellenden) Mechanismus integriert oder unabhängig davon ausgebildet sein. Bevorzugt erfolgt die Federung des Sattels in hauptsächlich vertikaler Richtung, aber auch andere Richtungen wie beispielsweise entlang der Sattelrohrachse oder entlang einer Kulisse oder einer Kombination daraus sind denkbar. Bei Verwendung einer Gasfeder (z. B. eine lineare Gasdruckfeder oder eine Drehgasdruckfeder) kann beispielsweise die Gasfeder eine Federungsfunktion übernehmen. Je nach Stellung des Sattels erfolgt dann die Federung zu verschiedenen Anteilen in vertikaler und horizontaler Richtung, denn die Verstellvorrichtung kann den Sattelschwerpunkt nur entlang der definierten Bahn verschieben. Bei geschickt ausgerichteter definierter Bahn kann dies vorteilhaft eingesetzt werden, indem gezielt in Abhängigkeit der Stellung des Sattels mehr oder weniger Federung in vertikaler Richtung erfolgt.

Alternativ kann auf eine Federungsfunktion verzichtet werden.

Insbesondere ist die Verstellvorrichtung ausschliesslich am Sattel und am, im oder am und im Sattelrohr eines Fahrradrahmens befestigt, wobei Bedienelemente der Verstellvorrichtung und deren Komponenten auch an anderen Stellen des Fahrrads und insbesondere am Lenker und am Steuer- und Oberrohr des Fahrradrahmens befestigt sein können.

Besonders vorteilhaft ist die Verstellvorrichtung wie eine herkömmliche Sattelstütze nur am Sattel und im und/oder am Sattelrohr befestigt. Dadurch wird kein spezieller Fahrradrahmen benötigt, und herkömmliche Fahrräder lassen sich leicht auf die Verstellvorrichtung umrüsten. Mit Vorteil ist die Verstellvorrichtung auch während der Fahrt bedienbar, um rasch, einfach, sicher und bequem auf ändernde Fahrverhältnisse eingehen zu können. Hierzu sind die Bedienelemente vorteilhafterweise derart am Fahrrad montiert, dass sie während der Fahrt einfach und sicher erreichbar sind. Ganz besonders gut dazu geeignet sind Lenker, Steuer- und Oberrohr, aber auch alle anderen während der Fahrt zugänglichen Stellen des Fahrrads. Die Bedienelemente können dabei die Verstellvorrichtung beispielsweise auf elektrische, hydraulische, pneumatische oder mechanische Weise bedienen, insbesondere durch einen Bowdenzug.

Die Verstellvorrichtung kann aber auch an anderen Stellen als nur am Sattel und im und/oder am Sattelrohr befestigt sein, beispielsweise am Oberrohr oder anderen Teilen des Fahrradrahmens. Die Bedienelemente der Verstellvorrichtung können an beliebiger Stelle des Fahrrads und/oder der Verstellvorrichtung befestigt werden, oder es kann auf Bedienelemente auch gänzlich verzichtet werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Seitenansicht eines Fahrradrahmens mit einem Sattel in zwei verschiedenen Positionen,
- Fig. 2: eine schematische Seitenansicht eines Fahrradrahmens mit einem Sattel in drei verschiedenen Positionen,
- Fig. 3: eine schematische Seitenansicht einer erfindungsgemässen Verstellvorrichtung in einem ersten Ausführungsbeispiel (umfassend ein Gelenkviereck),
- Fig. 4: eine schematische Ansicht der Hinterseite der erfindungsgemässen Verstellvorrichtung aus Fig. 3,
- Figs. 5.1 - 5.3: eine schematische Seitenansicht der erfindungsgemässen Verstellvorrichtung aus Fig. 3 in drei verschiedenen Positionen.
- Fig. 6: eine schematische Seitenansicht einer erfindungsgemässen Verstellvorrichtung in einem zweiten Ausführungsbeispiel (mit kraftübertragenden Zahnrädern),
- Fig. 7: eine schematische Seitenansicht einer erfindungsgemässen Verstellvorrichtung in einem dritten Ausführungsbeispiel (mit einem Zahnriemen),
- Fig. 8: eine schematische Seitenansicht einer erfindungsgemässen Verstellvorrichtung in einem vierten Ausführungsbeispiel (mit einer Drehgasdruckfeder) und
- Fig. 9: eine schematische Seitenansicht einer Drehgasdruckfeder.

Grundsätzlich sind in den Figuren gleiche Teile mit gleichen Bezugszeichen versehen.

### Wege zur Ausführung der Erfindung

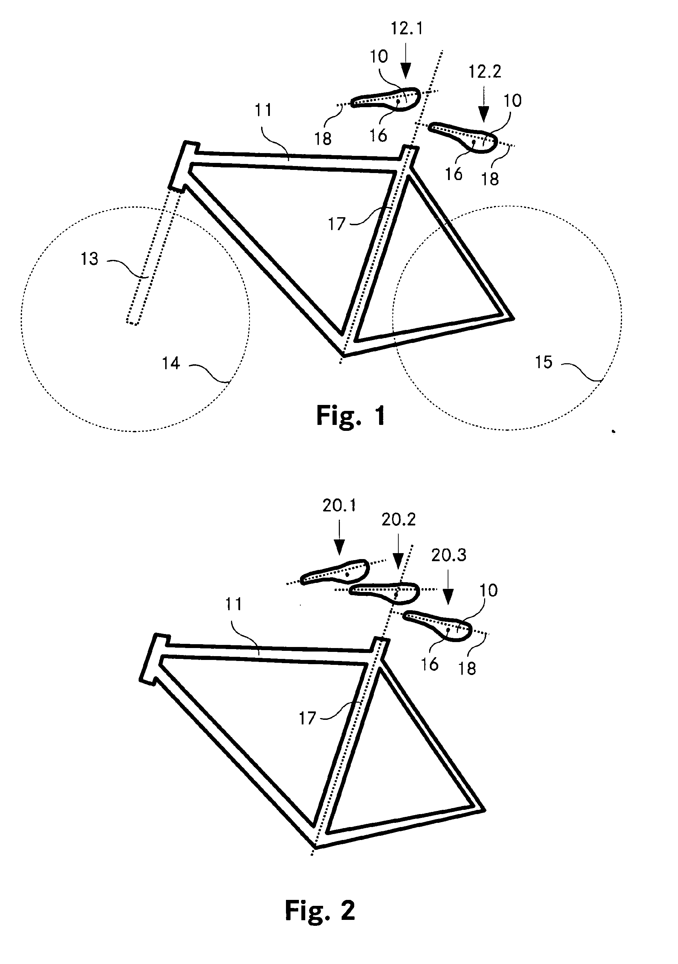

Fig. 1 stellt eine schematische Seitenansicht eines Sattels 10 und eines Fahrradrahmens 11 dar, wobei der Sattel 10 in zwei verschiedenen Sattelpositionen 12.1 und 12.2 abgebildet ist. Zum besseren Verständnis der Zeichnung sind mit durchbrochener Linie eine Rahmengabel 13, ein Vorderrad 14 sowie ein Hinterrad 15 skizziert. Die Sattelposition 12.1 entspricht einer hohen Position, in welcher ein Sattelschwerpunkt 16 relativ hoch über dem Fahrradrahmen 11 und vor einer Sattelrohrachse 17 des Fahrradrahmens 11 liegt. Die Sattelposition 12.2 hingegen entspricht einer tiefen Position, in welcher der Sattelschwerpunkt 16 relativ tief über dem Fahrradrahmen 11 und hinter der Sattelrohrachse 17 liegt. Der Winkel zwischen dem Sattel 10 und der Sattelrohrachse 17 ist dabei in der hohen Position 12.1 verschieden vom Winkel zwischen dem Sattel 10 und der Sattelrohrachse 17 in der tiefen Position 12.2. Dies ist durch eine Sattelsitzebene 18 illustriert: in der hohen Position 12.1 ist die Sattelsitzebene 18 nach vorne unten (d.h. nach vorne) geneigt, in der tiefen Position 12.2 nach hinten unten (d.h. nach hinten) geneigt.

In Fig. 2 sind drei ausgezeichnete Sattelpositionen 20.1 - 20.3 in einer schematischen Seitenansicht eines Sattels 10 und eines Fahrradrahmens 11 dargestellt. In der Sattelposition 20.1 befindet sich der Sattel 10 in einer Bergauf-Position: der Sattel befindet sich in einer ersten Höhe relativ hoch über dem Fahrradrahmen 11, vor der Sattelrohrachse 17 und ist nach vorne geneigt. In Sattelposition 20.3 nimmt der Sattel 10 eine Bergab-Position ein, in welcher der Sattel 10 in einer zweiten Höhe relativ tief über dem Fahrradrahmen 11, hinter der Sattelrohrachse und nach hinten geneigt angeordnet ist. Die Sattelposition 20.2 zeigt den Sattel 10 in einer Geradeaus-Position, in welcher sich der Sattel 10 auf einer dritten Höhe zwischen der ersten Höhe der Bergauf-Position 20.1 und der zweiten Höhe der Bergab-Position 20.3 befindet, sich auch in longitudinaler Richtung (vorne/hinten) zwischen der Bergauf-Position 20.1 und der Bergab-Position 20.3 befindet sowie eine Neigung aufweist, welche zwischen derjenigen der Bergauf-Position 20.1 und der Bergab-Position 20.3 liegt. Bevorzugt ist dabei die Neigung des Sattels 10 in der Geradeaus-Position 20.2 derart eingestellt, dass die Sattelsitzebene 18 etwa horizontal (vielleicht mit etwas Neigung nach vorne) liegt.

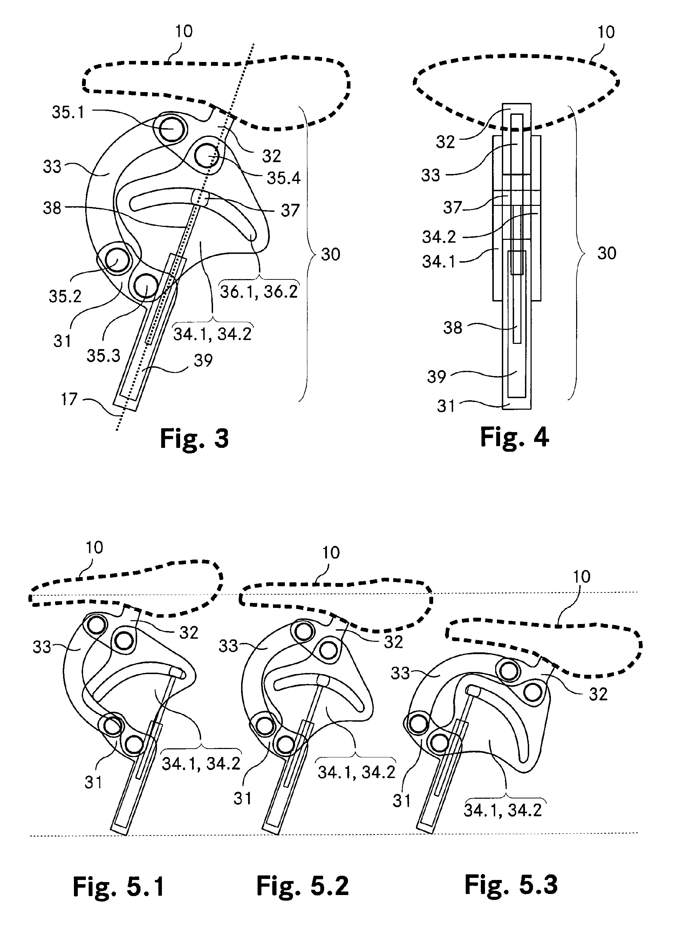

Ein erstes Ausführungsbeispiel 30 einer erfindungsgemässen Verstellvorrichtung ist in Fig. 3 in einer Seitenansicht dargestellt. Die Verstellvorrichtung 30 befindet sich dabei in einer Position, welche den Sattel 10 in der Geradeaus-Position 20.2 fixiert. Zur besseren Veranschaulichung sind alle Teile der Verstellvorrichtung 30 transparent und nur durch ihre durchgezogenen Umrisslinien dargestellt, und der Sattel 10 sowie die Sattelrohrachse 17 sind in durchbrochener Linie hinzugezeichnet. Die Elemente der Verstellvorrichtung sind aus Metall gefertigt.

Die Verstellvorrichtung 30 weist ein Fahrradverbindungsstück 31, ein Sattelverbindungsstück 32, einen Vorderarm 33 sowie zwei Hinterarme 34.1 und 34.2 auf. Die beiden Hinterarme 34.1 und 34.2 können dabei funktional als ein einziger Arm betrachtet werden, weil sie dieselbe Funktion erfüllen und nur aus konstruktiven Gründen in Form von zwei getrennten, deckungsgleichen und in der Seitenansicht identisch angeordneten Teilen ausgebildet sind. Das Fahrradverbindungsstück 31, das Sattelverbindungsstück 32, der Vorderarm 33 und die Hinterarme 34.1 und 34.2 sind durch Drehpunkte 35.1 - 35.4 miteinander verbunden und bilden ein Gelenkviereck.

Das Sattelverbindungsstück 32 ist am oberen Ende der Verstellvorrichtung 30 angeordnet und weist einen ovalen, nach hinten geneigten Grundkörper auf, welcher zwei Drehpunkte 35.1 und 35.4 umfasst. Der Drehpunkt 35.1 liegt dabei am vorderen, oberen Ende des ovalen Grundkörpers des Sattelverbindungsstücks 32, der Drehpunkt 35.4 am hinteren unteren Ende. Alle Drehpunkte 35.1 - 35.4 in Fig. 3 sind als überdimensionierte Drehachsen von etwa 2 cm Durchmesser dargestellt, und die Drehpunkte 35.1 und 35.4 sind etwa 4 cm voneinander entfernt, wobei die Entfernung aller Drehpunkte 35.1 - 35.4 immer die Entfernung zwischen deren Achsenmitten (d.h. deren effektiven geometrischen Drehachse) angibt. Der Drehpunkt 35.4 liegt etwa 2 cm tiefer als der Drehpunkt 35.1, und über dem Drehpunkt 35.4 formt der Grundkörper eine nach oben orientierte Haltevorrichtung für den Sattel 10 aus, wobei Drehpunkt 35.4 und Haltevorrichtung etwa auf der Sattelrohrachse 17 liegen.

Mit dem Sattelverbindungsstück 32 ist am Drehpunkt 35.1 der Vorderarm 33 verbunden, welcher sich nach vorne und vor allem nach unten erstreckt. Der bananenförmige Vorderarm 33 ist nach vorne gebogen, verläuft hauptsächlich vertikal und weist an seinem oberen Ende den Drehpunkt 35.1 und an seinem unteren Ende den Drehpunkt 35.2 auf. Diese beiden Drehpunkte bilden ein Gelenkdrehpunktpaar, liegen etwa auf einer zur Sattelrohrachse 17 parallelen Geraden und sind etwa 12 - 18 cm voneinander entfernt.

Am Drehpunkt 35.2 am unteren Ende des Vorderarms 33 ist der Vorderarm 33 mit dem Fahrradverbindungsstück 31 verbunden. Das Fahrradverbindungsstück 31 hat eine nierenförmige Grundform, welche nach unten gebogen ist und wie eine dickere Fortsetzung des Vorderarms 33 ausgebildet ist. Am vorderen oberen Ende der nierenförmigen Grundform befindet sich der Drehpunkt 35.2, am hinteren unteren Ende der Drehpunkt 35.3. Diese beiden Drehpunkte sind etwa 3.5 cm voneinander entfernt, und der Drehpunkt 35.3 liegt etwa 2 cm tiefer als der Drehpunkt 35.2 sowie etwa 3 cm vor der Sattelrohrachse 17. Das hintere untere Ende der nierenförmigen Grundform des Fahrradverbindungsstücks 31 bildet eine Verlängerung nach unten aus, welche in Richtung der Sattelrohrachse 17 verläuft und einen Aussendurchmesser aufweist, welcher in ein Sattelrohr des Fahrradrahmens 11 passt. Die Verlängerung ist etwa 8 - 16 cm lang und dient der Befestigung der Verstellvorrichtung 30 innerhalb des Sattelrohrs (analog zur Befestigung einer herkömmlichen Sattelstange im Sattelrohr).

Die Hinterarme 34.1 und 34.2 liegen weiter hinten als der Vorderarm 33, verlaufen wie dieser hauptsächlich vertikal, sind an ihren oberen Enden über den Drehpunkt 35.4 mit dem Sattelverbindungsstücke 32 verbunden und an ihren unteren Ende über den Drehpunkt 35.3 mit dem Fahrradverbindungsstück 31. Die Hinterarme 34.1 und 34.2 sind an ihren unteren Enden nicht wesentlich grösser als die überdimensionierte Drehachse des Drehpunkts 35.3 (also rund 3 cm breit), verbreitern sich gegen oben fächerartig bis auf eine Breite von etwa 12 - 18 cm und verjüngen sich danach gegen ihre obere Enden zu wieder auf etwa 3 cm. An der breitesten Stelle der Hinterarme 34.2 und 34.2 bilden von vorne nach hinten verlaufende Aussparungen in den Hinterarmen 34.1 und 34.2 Kulissen 36.1 und 36.2, welche eine nach oben gekrümmte Form aufweisen, etwa 10 - 15 cm breit und 1 - 2 cm hoch sind. Die Kulissen 36.1 und 36.2 umschliessen ein Führelement 37, wobei das Führelement 37 etwa gleich breit wie hoch ist und an seinem unteren sowie oberen Ende kontaktschlüssig in den Kulissen 36.1 und 36.2 angeordnet ist. Das Führelement 37 kann relativ zu den Kulissen 36.1 und 36.2 entlang der ganzen Länge der Kulissen 36.1 und 36.2 verschoben werden; die Kulissen 36.1 und 36.2 legen dadurch für das Führelement 37 eine definierte Bahn fest. Somit hängt die Bewegung des Sattelschwerpunkts 16 von der Bewegung des Führelements 37 ab, da das Führelement 37 direkt mit den Hinterarmen 34.1 und 34.2 des Gelenkvierecks in Verbindung steht; auf diese Weise begrenzt die maximale Auslenkung des Führelements 37 bezüglich der Kulissen 36.1 und 36.2 die maximale Auslenkung des Gelenkvierecks und damit die maximale Auslenkung des Sattelschwerpunkts 16, die Arretierung des Führelements 37 bewirkt eine Arretierung des Gelenkvierecks und des Sattelschwerpunkts 16 und eine Bewegung des Führelements 37 ist mit einer Bewegung des Gelenkvierecks (und dadurch auch des Sattelschwerpunkts 16) verbunden.

Am Führelement 37 ist eine Kolbenstange 38 derart befestigt, dass deren Achse entlang der Sattelrohrachse 17 nach unten verläuft und in einem Druckrohr 39 endet. Das Druckrohr 39 bildet mit der Kolbenstange 38 zusammen eine lineare Gasfeder; ein oberes Ende des Druckrohrs 39 umfasst dazu ein unteres Ende der Kolbenstange 38, welche sich im Druckrohr 39 entlang der Sattelrohrachse 17 bewegen kann. Die Kolbenstange 38 weist einen runden Querschnitt von 5 - 8 mm Aussendurchmesser auf und ist 10 - 15 cm lang und ist im runden Druckrohr 39 von 1.5 - 2.5 cm Aussendurchmesser und 11 - 16 cm Länge gelagert. Das Druckrohr 39 ist wie die Kolbenstange 38 symmetrisch um die Sattelrohrachse 17 angeordnet, und das Druckrohr 39 ist an einem unteren Ende fest mit dem Fahrradverbindungsstück 31 verbunden. Auf diese Weise kann die lineare Gasfeder eine Kraft auf das Fahrradverbindungsstück 31 und die Hinterarme 34.1 und 34.2 ausüben bzw. durch eine Arretierung der Gasfeder eine relative Bewegung von Fahrradverbindungsstück 31 und Hinterarmen 34.1 und 34.2 gegeneinander verhindern. Ausserdem erlaubt die Anordnung der Gasfeder bzw. des Antriebs im Fahrradverbindungsstück 31 eine besonders kompakte Bauweise der Verstellvorrichtung 30. Die Verstellvorrichtung 30 kann durch hier nicht dargestellte, geeignete Steuerelemente des Antriebs (in diesem Fall eine an sich bekannte Ventilsteuerung der linearen Gasfeder) während der Fahrt verstellt werden, also beispielsweise durch einen Bowdenzug mit einem Schalter vom Lenker aus.

In Fig. 4 ist dasselbe erfindungsgemässe Ausführungsbeispiel 30 der Verstellvorrichtung wie in Fig. 3 dargestellt, allerdings in einer Ansicht von hinten. Die Verstellvorrichtung 30 befindet sich dabei in derselben Position wie in Fig. 3, der Geradeaus-Position 20.2, und auch hier sind wieder zur besseren Veranschaulichung alle Teile der Verstellvorrichtung 30 transparent und nur durch ihre durchgezogenen Umrisslinien dargestellt. Ebenso ist der Sattel 10 in durchbrochener Linie hinzugezeichnet. Auf eine Darstellung der Drehachsen bzw. Drehpunkte 35.1 - 35.4 sowie der Kulissen 36.1 und 36.2 wird aus Gründen der Übersichtlichkeit verzichtet, diese sind aber vorhanden und bilden einen wesentlichen Bestandteil des erfindungsgemässen Ausführungsbeispiels.

Das unten liegende Fahrradverbindungsstück 31 und das oben liegende Sattelverbindungsstück 32 sind gleich breit ausgebildet und sind an ihren hinteren Enden an den linken Aussenseiten mit dem Hinterarm 34.1 sowie an den rechten Aussenseiten mit dem Hinterarm 34.2 (über die nicht eingezeichneten aber vorhandenen Drehpunkte 35.3 und 35.4 bzw. ein hinteres Gelenkdrehpunktpaar) verbunden. Zudem umfassen die vorderen Enden des Fahrradverbindungsstücks 31 und des Sattelverbindungsstück 32 das jeweilige (untere bzw. obere) Ende des schmaler ausgestalteten Vorderarms 33, welcher das Fahrradverbindungsstück 31 und das Sattelverbindungsstück 32 (über die nicht eingezeichneten aber vorhandenen Drehpunkte 35.1 und 35.2 bzw. ein vorderes Gelenkdrehpunktpaar) verbindet. In einem sandwichartigen Aufbau sind also das Fahrradverbindungsstück 31 und das Sattelverbindungsstück 32 teilweise von den Hinterarmen 34.1 und 34.2 umschlossen, wobei das Fahrradverbindungsstück 31 und das Sattelverbindungsstück 32 ihrerseits den Vorderarm 33 teilweise umschliessen.

Das Gasrohr 39 ist an seinem unteren Ende vom Fahrradverbindungsstück 31 umschlossen und umschliesst seinerseits das untere Ende der Kolbenstange 38. Die Kolbenstange 38 bildet mit dem Gasrohr 39 eine lineare Gasfeder und kann also relativ zum Gasrohr 39 verschoben oder gehalten werden. Die Kolbenstange 38 ist an ihrem oberen Ende mit dem Führelement 37 verbunden, welches durch die lineare Gasfeder in seinen Bewegungen kontrolliert wird. Das Führelement 37 ist in den in Fig. 4 nicht eingezeichneten aber vorhandenen Kulissen 36.1 (auf der linken Seite) und 36.2 (auf der rechten Seite) unten und oben kontaktschlüssig angeordnet und kann dadurch relativ zu den Hinterarmen 34.1 und 34.2 auf einer definierten Bahn geführt bewegt werden.

Das Ausführungsbeispiel 30 aus Fig. 3 ist in derselben Darstellung wie in Fig. 3 in den Figs. 5.1 - 5.3 in drei ausgezeichneten Sattelpositionen gezeichnet: in Fig. 5.1 in der Bergauf-Position, in Fig. 5.2 in der Geradeaus-Position und in Fig. 5.3 in der Bergab-Position. Aus den Figs. 5.1 - 5.3 ist gut ersichtlich, dass der Sattel in der Bergauf-Position am höchsten und am weitesten vorne sowie nach vorne geneigt positioniert ist, in der Bergab-Position am tiefsten, am weitesten hinten und nach hinten geneigt und in der Geradeaus-Position in Höhe, in Längsrichtung und in Sattelneigung zwischen der Bergauf- und der Bergab-Position. Die entsprechende Verschiebung des Gelenkvierecks ist aus den Zeichnungen ersichtlich. Das Führelement 37 in den Kulissen 36.1 und 36.2 kann dabei an diesen drei ausgezeichneten Positionen arretiert werden, wodurch die gesamte Verstellvorrichtung 30 arretiert ist. Durch eine stufenlos verstellbare lineare Gasfeder kann die Verstellvorrichtung aber auch in allen Positionen zwischen diesen ausgezeichneten Positionen (und ggf. darüber hinaus) stufenlos arretiert werden.

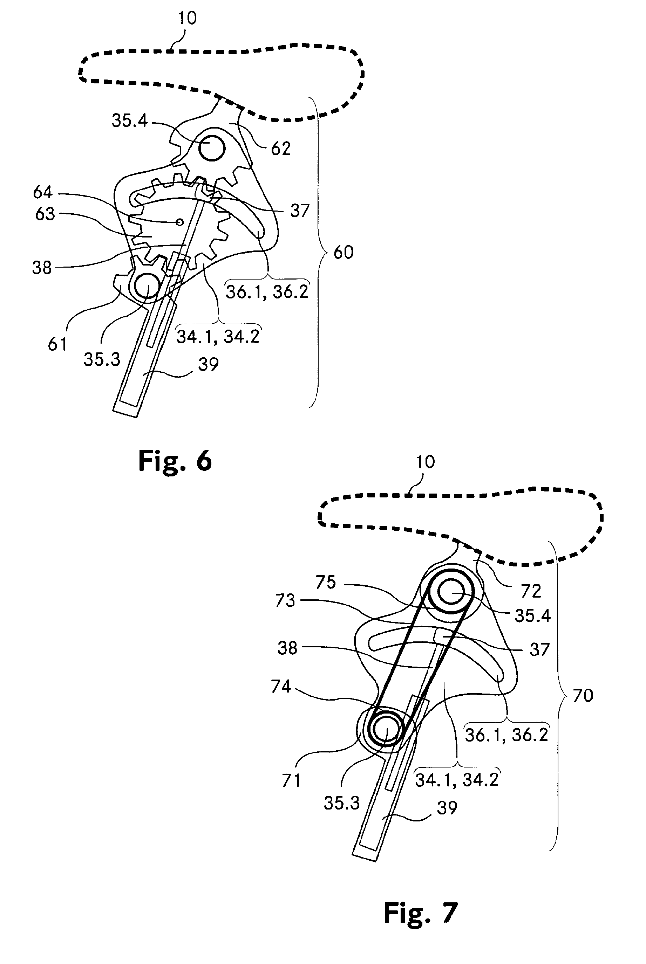

Ein zweites Ausführungsbeispiel 60 einer erfindungsgemässen Verstellvorrichtung ist in Fig. 6 in einer Seitenansicht dargestellt. Die Verstellvorrichtung 60 ist wie in Fig. 3 dargestellt, d. h. sie befindet sich in einer Position, welche den Sattel 10 in der Geradeaus-Position 20.2 fixiert, und zur besseren Veranschaulichung sind alle Teile der Verstellvorrichtung 60 transparent und nur durch ihre durchgezogenen Umrisslinien dargestellt (der Sattel 10 ist in durchbrochener Linie hinzugezeichnet).

Die Verstellvorrichtung 60 umfasst die bekannte lineare Gasfeder bestehend aus Kolbenstange 38 und Druckrohr 39. Am oberen Ende der Kolbenstange 38 ist das Führelement 37 befestigt, welches sich in den Kulissen 36.1 und 36.2 befindet und sich ihnen entlang bewegen kann. Die Kulissen 36.1 und 36.2 sind in den Hinterarmen 34.1 und 34.2 ausgebildet, und die Hinterarme 34.1 und 34.2 sind an den Drehpunkten 35.3 und 35.4 gelagert. Alle erwähnten Bestandteile sind identisch mit den entsprechenden Bestandteilen des ersten Ausführungsbeispiels 30. Im Gegensatz zum Ausführungsbeispiel 30 hingegen basiert das Ausführungsbeispiel 60 nicht auf einem Gelenkviereck, sondern auf einem Verstellmechanismus, in welchem eine Kraft zur Bewegung des Sattels (10) entlang der definierten Bahn und zum Verändern des Winkels des Sattels (10) zur Sattelrohrachse (17) durch miteinander zusammenwirkende Zahnräder im Verstellmechanismus übertragen wird. Dabei können auch nur segmentweise ausgebildete Zahnradteile, also beispielsweise Bestandteile der Verstellvorrichtung, bei welchen nur ein Teil der Oberfläche als Zahnrad eingesetzt wird, anstelle von gänzlich rund ausgeformten Zahnrädern eingesetzt werden.

Das Fahrradverbindungsstück 61 und das Sattelverbindungsstück 62 weisen an ihrem oberen resp. unteren Ende die Drehpunkte 35.3 und 35.4 auf. Radial um die Drehpunkte 35.3 und 35.4 angeordnet sind die Oberflächen des Fahrradverbindungsstücks 61 und des Sattelverbindungsstücks 62 als Zahnradsegmente ausgeformt, welche einen etwas grösseren Öffnungs- bzw. Mittelpunktswinkel als 100 Grad aufweisen und einander zugewandt sind. Zwischen den beiden Zahnradsegmenten und kraft- und kontaktschlüssig an den funktionalen Zahnradflächen mit ihnen verbunden befindet sich ein Zahnrad 63. Das Zahnrad 63 kann sich frei um eine Zahnradachse 64 drehen, welche starr mit den Hinterarmen 34.1 und 34.2 verbunden ist. Wie bereits beim Ausführungsbeispiel 30 ist der Sattel 10 oben auf dem Sattelverbindungsstück 62 befestigt, und das untere Ende des Druckrohrs 39 der linearen Gasfeder ist fest mit dem Fahrradverbindungsstück 61 verbunden, welches wiederum im Sattelrohr des Fahrradrahmens 11 befestigt ist.

Bei arretierter Kolbenstange 38 der linearen Gasfeder klemmt das Führelement 37 in den Kulissen 36.1 und 36.2, wodurch die Hinterarme 34.1 und 34.2 und dadurch die Verstellvorrichtung 60 in ihren Positionen fixiert sind. Bei gelöster Kolbenstange 38 kann sich die Verstellvorrichtung 60 bewegen: das Zahnradsegment des Fahrradverbindungsstücks 61 bleibt in einer relativ zum Fahrradrahmen fixen Position, aber (unter anderem) die Hinterarme 34.1 und 34.2 und die daran befestigte Zahnradachse 64 drehen sich um den Drehpunkt 35.3 nach vorne oder hinten. Das Zahnrad 63 wird dabei durch das Zahnradsegment des Fahrradverbindungsstücks 61 gedreht und dreht wiederum das Zahnradsegment des Sattelverbindungsstücks 62.

Das Zahnrad 63 ist derart zwischen den Zahnradsegmenten angeordnet, dass bei freier Rotation aller Bestandteile die beiden Zahnradsegmente dieselbe Rotationsrichtung aufweisen. Auf diese Weise kann eine Neigungsänderung des Sattels 10 relativ zur Sattelrohrachse 17, welche aufgrund einer Drehbewegung des gesamten oberen Teils der Verstellvorrichtung 60 um den Drehpunkt 35.3 entstehen würde, durch eine durch die Zahnradsegmente und das Zahnrad 63 bewirkte gegenläufige Neigungsänderung grösstenteils kompensiert werden. Das Zahnradsegment des Fahrradverbindungsstücks 61 weist dabei einen kleineren Radius als das Zahnradsegment des Sattelverbindungsstücks 62 auf, wodurch eine Untersetzung entsteht und die Neigungsänderung des Sattels 10 - durch die Drehung des oberen Teils der Verstellvorrichtung 60 um den Drehpunkt 35.3 - nicht vollständig kompensiert wird. Dies bewirkt die gewünschte Neigungsänderung des Sattels 10 bezüglich der Sattelrohrachse 17: bewegt sich der Sattel 10 auf der Verstellvorrichtung 60 nach vorne bzw. nach hinten, neigt sich die Sattelspitze 10 leicht nach unten bzw. nach oben.

Die Verstellvorrichtung 60 weist einen sandwichartigen Aufbau ähnlich demjenigen des Ausführungsbeispiels 30 auf, wobei das Ausführungsbeispiel 60 jeweils eine oder zwei zusätzliche Sandwich-Schichten, welche die Zahnräder beinhalten, links bzw. rechts aussen aufweist.

Ein drittes Ausführungsbeispiel 70 einer erfindungsgemässen Verstellvorrichtung ist in Fig. 7 in einer Seitenansicht und wie in den Figuren 3 und 6 dargestellt. Im Vergleich zum Ausführungsbeispiel 60 weist das Ausführungsbeispiel 70 lediglich anders gestaltete Sandwich-Schichten des sandwichartigen Aufbaus auf, welche im Ausführungsbeispiel 60 Zahnräder bzw. Zahnradsegmente beinhalten. Im Ausführungsbeispiel 70 weisen das Fahrradverbindungsstück 71 und das Sattelverbindungsstück 72 keine Zahnradsegmente auf, sondern auf der Achse der Drehpunkte 35.3 und 35.4 liegen Riemenscheiben: eine Riemenscheibe 74 mit einem kleineren Radius auf der Achse des Drehpunkts 35.3 des Fahrradverbindungsstücks 71 sowie eine Riemenscheibe 75 mit einem grösseren Radius als die Riemenscheibe 74 auf der Achse des Drehpunkts 35.4 des Sattelverbindungsstücks 72. Die Riemenscheiben 74 und 75 sind dabei starr mit dem Fahrradverbindungsstücks 71 bzw. dem Sattelverbindungsstück 72 verbunden.

Das Ausführungsbeispiel 70 unterscheidet sich dadurch vom Ausführungsbeispiel 60, dass die Kompensation der Neigungsänderung des Sattels 10 relativ zur Sattelrohrachse 17 durch die Drehung des oberen Teils der Verstellvorrichtung 70 um den Drehpunkt 35.3 nicht über Zahnräder, sondern über einen Zahnriemen 73 bewerkstelligt wird. Der Zahnriemen 73 umspannt dabei die Riemenscheiben 74 und 75. Analog zum Zahnrad 63 des Ausführungsbeispiels 60 stellt der Zahnriemen 73 sicher, dass sich die beiden Riemenscheiben 74 und 75 bei freier Rotation in dieselbe Richtung drehen. Und analog zu den unterschiedlichen Radien der Zahnradsegmente gewährleisten die unterschiedlichen Radien der Riemenscheiben 74 und 75 eine Untersetzung, welche die Neigungsänderung des Sattels 10 nicht vollständig kompensiert und dadurch die gewünschte Neigungsänderung des Sattels 10 bezüglich der Sattelrohrachse 17 beim Verstellen der Verstellvorrichtung 70 bewirkt.

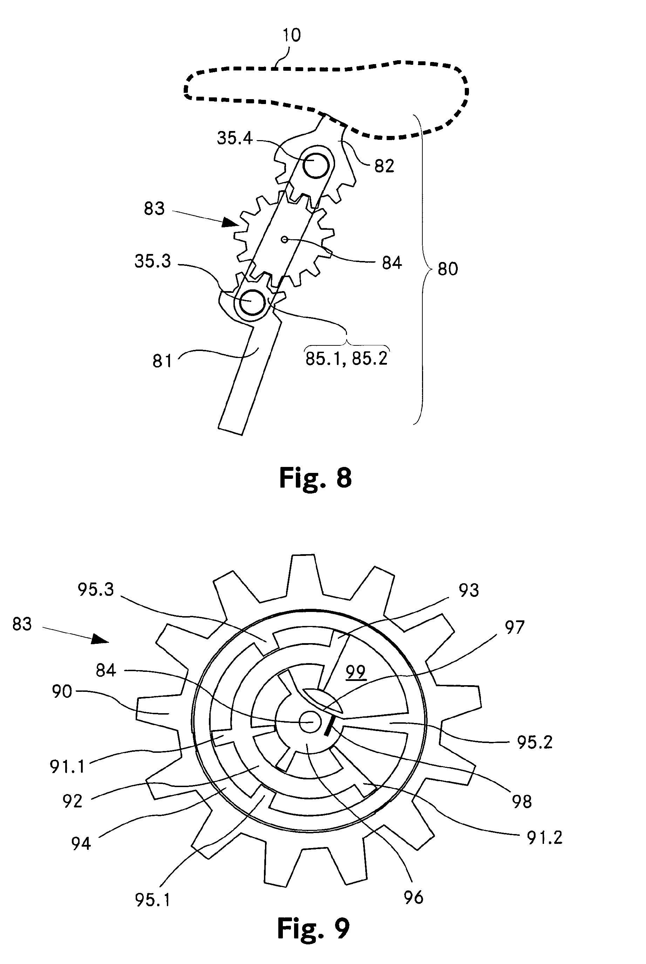

Ein viertes Ausführungsbeispiel 80 einer erfindungsgemässen Verstellvorrichtung ist in Fig. 8 in einer Seitenansicht und wie in den Figuren 3, 6 und 7 dargestellt. Das vierte Ausführungsbeispiel 80 weist einen Verstellmechanismus mit Zahnrädern wie das zweite Ausführungsbeispiel 60 auf, allerdings in einem anders angeordneten sandwichartigen Aufbau. Vom zweiten Ausführungsbeispiel 60 unterscheidet sich das Ausführungsbeispiel 80 hauptsächlich dadurch, dass das Arretieren und kontrollierte Verstellen der Verstellvorrichtung 80 nicht durch lineare Gasfeder, Führungselement 37, Kulissen 36.1 und 36.2 sowie Hinterarme 34.1 und 34.2 erfolgt, sondern durch eine Drehgasdruckfeder 83.

Analog zum Ausführungsbeispiel 60 und in Seitenansicht betrachtet gleichartig ausgeformt weisen das Fahrradverbindungsstück 81 sowie das Sattelverbindungsstück 82 Zahnradsegmente auf, welche jetzt allerdings in einer in der Mitte liegenden Sandwich-Schicht der Verstellvorrichtung 80 angeordnet sind. Anstelle des Zahnrads 63 befindet sich zwischen den Zahnradsegmenten die Drehgasdruckfeder 83. Je links und rechts der mittigen Sandwich-Schicht mit den Zahnradsegmenten und der Drehgasdruckfeder 83 liegen zwei Schenkel 85.1 und 85.2, wobei die Schenkel 85.1 und 85.2 beide jeweils an den Drehpunkten 35.3 und 35.4 gelagert sind. Zudem ist die Achse 84 der Drehgasdruckfeder 83 starr an den Schenkeln 85.1 und 85.2 befestigt, wobei die Achse 84 der Drehgasdruckfeder 83 auf einer Verbindungslinie der Achsen der Drehpunkte 35.1 und 35.3 liegt. Die plattenartigen Schenkel 85.1 und 85.2 sind aus Gewichtsgründen möglichst klein gehalten und umrahmen und verbinden die Drehpunkte 35.1 und 35.3 sowie die dazwischen liegende Achse 84 der Drehgasdruckfeder 83 mit einer für die mechanische Stabilität nötige Materialdicke.

Wie beim Ausführungsbeispiel 60 weisen die Zahnradsegmente eine Untersetzung auf, und beide Zahnradsegmente würden im Fall einer freien Rotation durch die Drehgasdruckfeder 83 in dieselbe Rotationsrichtung bewegt. Diese Anordnung bewirkt ebenfalls die gewünschte Neigung des Sattels 10 relativ zur Sattelrohrachse 17 beim Bewegen des Sattelschwerpunkts 16 entlang der definierten Bahn. Die Drehgasdruckfeder 83 verfügt über einen Bewegungs- und Arretiermechanismus, welcher die Zähne der Drehgasdruckfeder 83 um die Achse 84 der Drehgasdruckfeder 83 rotieren lassen oder relativ dazu fixieren kann. Auf diese Weise kann der gesamte Verstellmechanismus 80 arretiert oder bewegt werden. Durch hier nicht dargestellte, geeignete Steuerelemente des Antriebs (beispielsweise eine an sich bekannte Ventilsteuerung wie bei der der linearen Gasfeder) kann die Verstellvorrichtung 80 während der Fahrt verstellt werden, also beispielsweise durch einen Bowdenzug mit einem Schalter vom Lenker aus.

Die Drehgasdruckfeder 83 ist in Fig. 9 in einer schematischen Seitenansicht dargestellt und weist eine der linearen Gasfeder analoge Funktionsweise auf: eine mit Gas gefüllte Kammer 99 ist durch einen in ihr beweglichen und gegen die Wand der Kammer 99 abdichtenden Kolben 93 in zwei Teile getrennt, und die beiden Teile der Kammer 99 können über eine sie verbindende Öffnung - den Kanal 97 - gegenseitig Gas austauschen. Bei einer Bewegung des Kolbens 93 entlang den Wänden der Kammer 99 kann bei einem offenen Kanal 97 Gas aus einem Teil der Kammer 99 in den anderen Teil der Kammer 99 gelangen, wodurch eine kontrollierte und gegebenenfalls gedämpfte Bewegung des Kolbens 93 erreicht wird. Ein Bolzen 98 ist derart beweglich beim Kanal 97 angeordnet, dass der Bolzen 98 den Kanal 97 entweder gasdicht verschliesst oder offen lässt (in Fig. 9 ist der Kanal 97 offen). Ist der Kanal 97 durch den Bolzen 98 verschlossen, lässt sich der Kolben 93 nicht mehr in der Kammer 99 bewegen, und die Drehgasdruckfeder 83 ist arretiert.

Der Bewegungs- und Arretiermechanismus der Drehgasdruckfeder 83 besteht im wesentlichen aus zwei konzentrisch angeordneten, gegeneinander rotier- und arretierbaren Teilen: einem Zahnkranz 90 und einer Achse 84. Der Zahnkranz 90 ist das am weitesten von der in der Mitte liegenden Achse 84 entfernte Bestandteil der Drehgasdruckfeder 83 und weist an seiner Aussenseite eine funktionale Zahnradfläche auf, d. h. Zähne und die entsprechenden Zwischenräume und -flächen. Der ringartige Zahnkranz 90 weist gegen innen eine kreisrunde Öffnung auf, in welcher sich starr mit dem Zahnkranz 90 verbunden eine Kolbenstange 92, ein Kolben 93 und zwei Stützen 91.1 und 91.2 befinden.

Die Kolbenstange 92 ist konzentrisch um die Achse 84 gebogen und von etwa gleicher Dicke wie der Zahnkranz 90 (ohne Zähne). An einem Ende der Kolbenstange 92 ist der Kolben 93 ausgeformt, welcher in der Kammer 99 liegt, keilförmig ausgebildet ist und dessen Spitze radial in Richtung Achse 84 zeigt. Der Öffnungswinkel der Keilspitze des Kolbens 93 beträgt etwa 10 - 15 Grad, und der Kolben 93 ist in radialer Richtung durch die Innenwände der Kammer 99 begrenzt, mit welchen er gasdicht aber entlang der Innenwände beweglich in Kontakt steht. Die Kolbenstange 92 weist an ihrem dem Kolben 93 gegenüberliegenden Ende eine Stütze 91.2 auf, welche dieselbe Keilform wie der Kolben aufweist, hingegen aber radial gegen aussen länger ist und im Gegensatz zum Kolben 93 teilweise mit dem Zahnkranz 90 verbunden ist. Die Kolbenstange 92 erstreckt sich über einen Winkel von 240 Grad um die Achse 84 herum, und auf der Kolbenstange 92 mittig zwischen dem Kolben 93 und der Stütze 91.2 angeordnet befindet sich eine weitere baugleiche Stütze 91.1, welche die Kolbenstange 92 ebenfalls mit dem Zahnkranz 90 verbindet.

Die Achse 84 ist starr mit einem Innenring 96 verbunden, welcher konzentrisch zur Achse 84 angeordnet ist und etwa die Dicke der Kolbenstange 92 aufweist. Der Innenring 96 ist durch drei Streben 95.1 - 95.3 mit einem Aussenring 94 verbunden, welcher ebenfalls etwa die Dicke der Kolbenstange 92 aufweist und von innen beweglich an der Innenwand des Zahnkranzes 90 anliegt. Die Streben 95.1 - 95.3 sind wie die Stützen 91.1 und 91.2 keilförmig ausgebildet und radial ausgerichtet. Die Keilform der Streben 95.1 - 95.3 weist ebenfalls einen Öffnungswinkel von etwa 10 - 15 Grad auf, und die Streben 95.1 - 95.3 sind gleichmässig auf dem Umfang der Ringe 94 und 96 verteilt, also in einem Abstand von 120 Grad zueinander. Dadurch entstehen drei durch die Ringe 94 und 96 sowie durch die Streben 95.1 - 95.3 begrenzte Räume, wobei der Raum zwischen den Streben 95.2 und 95.3 die mit Gas gefüllte Kammer 99 darstellt. Im Innenring 96 ist der Kanal 97 derart ausgebildet, dass er zwei durch den Kolben 93 getrennte Teile der Kammer 99 miteinander verbindet. Zudem ist im Innenring 96 der Bolzen 98 beweglich derart angeordnet, dass er den Kanal 97 gasdicht versperren oder offen lassen kann. Der Bolzen 98 kann durch hier nicht dargestellte, geeignete Steuerelemente (beispielsweise durch Mechanik mit einem Bowdenzug) aus der Entfernung gesteuert werden (etwa durch einen Schalten am Lenker des Fahrrads).

Die Strebe 95.3 weist in etwa der Mitte ihrer radialen Ausdehnung einen gasdichten Durchtritt für die Kolbenstange 92 auf, so dass die Kolbenstange 92 durch die Strebe 95.3 hindurch bewegt werden kann. Zusätzlich tritt die Kolbenstange 92 auch durch die Strebe 95.1 beweglich hindurch. Die Stützen 91.1 und 91.2 wiederum treten teilweise durch den Aussenring 94 hindurch, um die starre Verbindung mit dem Zahnkranz 90 zu gewährleisten, aber stützen teilweise auch (in Umfangsrichtung beweglich) von innen gegen die Innenwand des Aussenrings 94 auf - ähnlich dem Kolben 93. Ähnlich dem Kolben 93 stehen die Stützen 91.1 und 91.2 auch von aussen mit der Aussenseite des Innenrings 96 (in Umfangsrichtung beweglich) in Kontakt. Durch die Stützen 91.1 und 91.2 sowie den Kolben 93 ist der Zahnkranz 90 in Umfangsrichtung beweglich um die Achse 84 gelagert und kann in einem Bereich von etwa 100 Grad um die Achse 84 gedreht werden (entsprechend dem Bewegungsfreiraum des Kolbens 93 in der Kammer 99).

Während oben verschiedene bevorzugte Ausführungsbeispiele der Erfindung dargestellt und beschrieben worden sind, ist es für Fachleute selbstverständlich, dass Veränderungen bei diesen Ausführungsbeispielen gemacht werden können, ohne vom Prinzip und dem Geist der Erfindung abzuweichen, deren Schutzumfang in den beigefügten Ansprüchen umrissen ist.

Die Form der Arme des Gelenkvierecks kann auch anders ausgebildet sein, und insbesondere kann der Hinterarm auch nicht zweiteilig, sondern nur einteilig ausgeformt werden. Solange das Gelenkviereck in seiner Funktionsweise gleich funktioniert bzw. die Drehpunkte seitlich betrachtet gleich angeordnet sind, spielt die Anzahl der konstruktiven Elemente und deren Lage innerhalb der Sandwich-Bauweise keine Rolle. Auf eine Sandwich-Bauweise kann ebenfalls verzichtet werden.

Das Sattelverbindungsstück und das Fahrradverbindungsstück müssen nicht Teile des Gelenkvierecks sein bzw. an den Armen des Gelenkvierecks ausgeformt sein, sondern können auch separate Elemente der Verstellvorrichtung bilden. Der Mechanismus kann auch aus anderen Konstruktionen als einem Gelenkviereck bestehen, beispielsweise (wie bereits weiter oben beschrieben) aus einem anderen Gelenkvieleck, einer Konstruktion mit Zahnrädern etc. Zudem kann die Verstellvorrichtung auch aus anderem Material als Metall hergestellt werden, insbesondere aus Kunststoff, Verbundstoffen, Holz oder Mischungen daraus.

Die Kulisse muss nicht im Hinterarm ausgebildet sein, sondern kann auch in anderen Armen des Gelenkvierecks oder anderen Teilen der Verstellvorrichtung ausgeformt sein. Die Kulisse kann beispielsweise aber auch als separates Element ausgebildet sein. Oder die Verstellvorrichtung wird durch gänzlich andere Mittel geführt, bewegt, kontrolliert und/oder arretiert, beispielsweise durch Zahnräder, Ketten, (Draht-)Seile, Stifte, Bolzen und dergleichen mehr. Auch die lineare Gasfeder und die Drehgasdruckfeder können durch andere Bauteile oder Konstruktionsprinzipien ersetzt werden, welche eine Führung/Bewegung/Kontrolle und/oder Arretierung der Verstellvorrichtung erlauben.

Bei der Verwendung von zwischen Fahrrad- und Sattelverbindungsstück liegenden Zahnrädern ist bevorzugt eine ungerade Zahl von Zahnrädern zu verwenden. Die funktionalen Zahnradflächen müssen auch nicht am Fahrrad- und/oder Sattelverbindungsstück, sondern können auch als separate Elemente ausgebildet sein. Denkbar ist aber jede Anzahl und Anordnung von Zahnrädern, welche schlussendlich die gewünschte Neigung des Sattels erreicht. Verschiedene Kombinationen von Zahnrädern und/oder Zahnradsegmenten können in einer Vielzahl von verschiedenen Anordnungen und in verschiedenen Grössenverhältnissen die gewünschte Neigung des Sattels erreichen, und insbesondere ist nicht festgelegt, welche Zahnräder bzw. Zahnradsegmente mit welchen Bestandteilen der Vorrichtung starr verbunden sind bzw. um eine starre mit den Bestandteilen verbundenen Achsen rotieren können.

Zahnriemen, Ketten und dergleichen können auf viele erdenkliche Arten gelenkt und geführt werden (z. B. mit Umlenkrollen oder Gleitlagern), ohne dass dabei deren Funktion (das Antreiben von beweglichen Teile) beeinträchtigt wird. Die weiter oben beschriebene Drehgasdruckfeder kann in vielen Details variiert und auf vielfältige Weise eingesetzt werden; im Prinzip geht es um ein rotierendes Element, welches entweder relativ zu seiner Achse bewegt oder arretiert werden kann. Grösse und Anzahl von Kammern, Stützen, Streben usw. können der Anwendung und Belastung entsprechend angepasst werden, ebenso die Art und die Menge des Gases, das Durchflussvermögen des Kanals, die Art der Kontrolle über den Durchfluss durch den Kanal (abdichten durch Bolzen, Klappen, Schrauben, Ventile und dergleichen) sowie deren Bedienung und andere technische Einzelheiten.

Die sandwichartige Bauweise kann in der Anordnung ihrer Schichten variieren, wobei einzelne Schichten in baugleicher Weise ein- oder mehrfach vorkommen können. Insbesondere kann zusätzlich als äusserste Schicht noch eine Verschalung oder ein Gehäuse mindestens teilweise die Verstellvorrichtungen umhüllen, um die Verstellvorrichtung vor Verschmutzung und Beschädigung zu schützen und/oder um vor Verletzungen durch Verstellvorrichtung oder dem Verfangen in der Verstellvorrichtung zu schützen. Dazu könnten insbesondere die Schenkel des vierten Ausführungsbeispiels (in Fig. 6) derart verbreitert werden, dass sie das Zahnrad, die Zahnradsegmente und die Drehgasdruckfeder 83 in seitlicher Richtung überdecken.

Ausserdem kann die Verstellvorrichtung neben den drei ausgezeichneten (Bergauf-, Bergab- und Geradeaus-) Positionen gänzlich unterschiedliche Positionen und/oder alternative Positionen vorsehen, so etwa Positionen zum Tragen, Transportieren oder Lagern des Fahrrads, zum Transportieren von Waren und/oder Personen mit dem Fahrrad und dergleichen mehr. Die definierte Bahn, entlang welcher sich der Sattelschwerpunkt verschiebt, kann verschiedene Formen und Dimensionen annehmen. Vorzugsweise bewegt sich der Sattelschwerpunkt dabei aber in einem Kreissegment, welches einen Mittelpunkt auf oder nur wenige Zentimeter entfernt von der Sattelrohrachse am oberen Ende des Sattelrohrs aufweist. Dieses Kreissegment liegt (wie die Sattelrohrachse) in einer vom Fahrradrahmen aufgespannten Ebene und befindet sich über dem Mittelpunkt des Kreissegments. Das Kreissegment weist insbesondere einen Öffnungs- bzw. Mittelpunktswinkel von 30 - 150 Grad und bevorzugt von 80 - 95 Grad auf und ist symmetrisch um eine durch den Mittelpunkt des Kreissegments verlaufende Parallele zur Sattelrohrachse angeordnet. Insbesondere bewegt sich der Sattelschwerpunkt auf seiner definierten Bahn innerhalb des Kreissegments nicht näher als 5 cm und nicht weiter als 24 cm (und bevorzugt nicht näher als 13 cm und nicht weiter als 18 cm) vom Mittelpunkt des Kreissegments entfernt. Die Verstellvorrichtung kann derart ausgestaltet und mit entsprechenden Bedienelementen versehen sein, dass sie während der Fahrt, während eines Stillstandes oder bei beiden Gelegenheiten bedient bzw. verstellt werden kann.

Zusammenfassend ist festzustellen, dass durch die Erfindung eine Verstellvorrichtung geschaffen wird, welche einen Sattel eines Fahrrads gleichzeitig in der Höhe, der Längsrichtung und der Neigung verstellt und über einen Antrieb verfügt, welcher den Sattel in eine zum bergabwärts fahren geeignete Position und eine zum bergaufwärts fahren geeignete Position bringen kann und zudem mit einem handelsüblichen Fahrradrahmen eingesetzt werden kann.

## Patentansprüche

1. Verstellvorrichtung (30, 60, 70, 80) für einen Sattel (10) eines Fahrrads, umfassend
a) ein Fahrradverbindungsstück (31, 61, 71, 81) und ein Sattelverbindungsstück (32, 62, 72, 82);
b) einen Mechanismus, der in einem ersten Drehpunkt (35.3) am fest mit dem Fahrrad verbindbaren Fahrradverbindungsstück (31, 61, 71, 81) und insbesondere an einem im Sattelrohr des Fahrradrahmens (11) befestigten Stützrohr gelagert ist, und der in einem zweiten Drehpunkt (35.4) am mit dem Sattel (10) verbindbaren Sattelverbindungsstück (32, 62, 72, 82) gelagert ist, wobei der Mechanismus eine Verschiebung des Sattelschwerpunkts (16) entlang einer definierten Bahn zwischen einer hohen Position (12.1), die vor der Sattelrohrachse (17) liegt, in eine tiefe Position (12.2), die hinter der Sattelrohrachse (17) liegt, ermöglicht;
c) einen Antrieb, der die Bewegung des Sattels (10) entlang der definierten Bahn und Arretierung des Sattels (10) in mehreren Sattelpositionen (12.1 - 12.2) entlang der definierten Bahn ermöglicht;
wobei
d) der Mechanismus in Abhängigkeit der Sattelpositionen (12.1 - 12.2) entlang der definierten Bahn den Winkel des Sattels (10) zur Sattelrohrachse (17) sowie den Winkel des Sattels (10) zu einer durch die beiden Drehpunkte (35.3 - 35.4) verlaufenden Gerade verändert;
e) der Antrieb nur an Bestandteilen der Verstellvorrichtung (30, 60, 70, 80) angreift.

2. Verstellvorrichtung (30, 60, 70, 80) gemäss Anspruch 1, **gekennzeichnet dadurch, dass** die Verstellvorrichtung (30, 60, 70, 80) den Fahrradsattel (10) in mindestens drei ausgezeichneten Positionen (20.1 - 20.3) halten kann:
a) in einer Bergauf-Position (20.1), in welcher sich der Sattel (10) in einer ersten Höhe und bezüglich der Sattelrohrachse (17) vorne befindet sowie nach vorne geneigt ist,
b) in einer Bergab-Position (20.3), in welcher sich der Sattel (10) in einer zweiten Höhe und bezüglich der Sattelrohrachse (17) hinten befindet sowie nach hinten geneigt ist,
c) in einer Geradeaus-Position (20.2), in welcher sich der Sattel (10) in einer dritten Höhe und bezüglich der Sattelrohrachse (17) zwischen der Bergauf-(20.1) und der Bergab-Position (20.3) befindet sowie nicht geneigt d.h. gerade ist, wobei die dritte Höhe zwischen der ersten Höhe und der zweiten Höhe liegt.

3. Verstellvorrichtung (30, 60, 70, 80) gemäss einem der Ansprüche 1 - 2, **gekennzeichnet dadurch, dass** die Verstellvorrichtung (30, 60, 70, 80) stufenlos verstell- und arretierbar ist.

4. Verstellvorrichtung (30) gemäss einem der Ansprüche 1 - 3, **gekennzeichnet dadurch, dass** der Verstellmechanismus ein Gelenkviereck umfasst.

5. Verstellvorrichtung (30) gemäss Anspruch 4, **gekennzeichnet dadurch, dass** das Gelenkviereck unterschiedliche Distanzen zwischen Gelenkdrehpunktpaaren aufweist.

6. Verstellvorrichtung (30) gemäss Anspruch 5, **gekennzeichnet dadurch, dass** die beiden in der Geradeaus-Position (20.2) am weitesten oben liegenden Gelenkdrehpunkte (35.1 - 35.4) des Gelenkvierecks weiter auseinander liegen als die beiden am weitesten unten liegenden Gelenkdrehpunkte (35.1 - 35.4), wobei die am weitesten oben liegenden Gelenkdrehpunkte (35.1 - 35.4) jeweils gleich weit von den mit ihnen verbundenen unten liegenden Gelenkdrehpunkten (35.1 - 35.4) entfernt liegen.

7. Verstellvorrichtung (60, 70, 80) gemäss einem der Ansprüche 1 - 3, **gekennzeichnet dadurch, dass** eine Kraft zur Bewegung des Sattels (10) entlang der definierten Bahn und zum Verändern des Winkels des Sattels (10) zur Sattelrohrachse (17) durch miteinander zusammenwirkende Zahnräder und/oder durch Zahnriemen im Verstellmechanismus übertragen wird.

8. Verstellvorrichtung (30, 60, 70) gemäss einem der Ansprüche 1 - 7, **gekennzeichnet dadurch, dass** die Bewegung des Sattelschwerpunkts (16) relativ zum Fahrradrahmen (11) von einer Bewegung eines Führelements (37) relativ zu einer Kulisse (36.1 - 36.2) abhängt, wobei das Führelement (37) entlang der Kulisse (36.1 - 36.2) in der Verstellvorrichtung (30, 60, 70) bewegt werden kann und durch die Kulisse (36.1 - 36.2) geführt ist.

9. Verstellvorrichtung (30) gemäss einem der Ansprüche 4 - 6 oder 8, **gekennzeichnet dadurch, dass** die Kulisse (36.1 - 36.2) an einem Arm des Gelenkvierecks ausgebildet ist, insbesondere an einem in der Geradeaus-Position hauptsächlich vertikal verlaufenden Arm des Gelenkvierecks (33, 34.1 - 34.2).

10. Verstellvorrichtung (30, 60, 70, 80) gemäss einem der Ansprüche 1 - 9, **gekennzeichnet dadurch, dass** der Antrieb mindestens eine Gasfeder, insbesondere eine linearen Gasfeder und/oder eine Drehgasfeder, umfasst.

11. Verstellvorrichtung (30, 60, 70) gemäss Anspruch 10, **gekennzeichnet dadurch, dass** die lineare Gasfeder mit einem Ende am Fahrradverbindungsstück (31) und an einem gegenüberliegenden Ende am Führelement (37) befestigt ist, wobei das Führelement (37) entlang der Kulisse (36.1 - 36.2) bewegt werden kann.

12. Verstellvorrichtung (30, 60, 70, 80) gemäss einem der Ansprüche 1 - 11, **gekennzeichnet dadurch, dass** die Verstellvorrichtung (30, 60, 70, 80) eine Federungsfunktion umfasst.

13. Verstellvorrichtung (30, 60, 70, 80) gemäss einem der Ansprüche 1 - 12, **gekennzeichnet dadurch, dass** die Verstellvorrichtung (30, 60, 70, 80) ausschliesslich am Sattel (10) und am, im oder am und im Sattelrohr eines Fahrradrahmens (11) befestigt ist, wobei Bedienelemente der Verstellvorrichtung (30, 60, 70, 80) und deren Komponenten auch an anderen Stellen des Fahrrads und insbesondere am Lenker und am Steuer- und Oberrohr des Fahrradrahmens (11) befestigt sein können.
